# EUROPEAN PATENT APPLICATION

(11) **EP 4 783 280 A1**
(43) Date of publication of application: **29.07.2026**
(21) Application number: 25867304.5
(22) Date of filing: 02.10.2025
(51) Int. Cl.: H01M 10/04, H01M 10/42, H01M 50/586, H01M 50/595, H01M 10/052, H01M 50/249

(54) **ELECTRODE ASSEMBLY, BATTERY CELL, AND BATTERY PACK AND VEHICLE INCLUDING SAME**

(30) Priority: 08.10.2024 KR 20240136364
(71) Applicant: LG Energy Solution, Ltd., Seoul 07335 (KR)
(72) Inventor: KIM, Ki Hoon, Daejeon 34122 (KR)
(74) Representative: Goddar, Heinz J.
(86) International application number: PCT/KR2025/095633
(87) International publication number: WO 2026/079948

(57) **Abstract**

An electrode assembly according to an embodiment of the present invention includes a first electrode, a second electrode, and a separator interposed therebetween, which are wound around a winding axis to define a core and an outer circumferential surface, and a tape is attached to at least a partial region of the separator.

## Description

### [TECHNICAL FIELD]

The present invention relates to an electrode assembly, a battery cell, and a battery pack and a vehicle comprising the same.

### [BACKGROUND ART]

Unlike non-rechargeable primary batteries, secondary batteries refer to rechargeable batteries capable of being charged and discharged. Such secondary batteries are applied not only to portable electronic devices but also to electrically driven vehicles, such as electric vehicles (EVs) and hybrid electric vehicles (HEVs), which are driven by electric power sources.

Types of secondary batteries currently in widespread use include lithium-ion batteries, lithium-polymer batteries, nickel-cadmium batteries, nickel-metal hydride batteries, and nickel-zinc batteries. The operating voltage of a single secondary battery cell, i.e., a unit battery cell, is approximately 2.5 V to 4.6 V.

Therefore, when a higher output voltage is required, a battery pack is formed by connecting a plurality of battery cells in series. In addition, the battery pack may be constructed by electrically connecting a plurality of battery cells in parallel according to the required charge/discharge capacity. Accordingly, the number of battery cells included in the battery pack may be variously determined depending on the required output voltage or charge/discharge capacity.

When a plurality of battery cells are connected in series and/or in parallel to form a battery pack, it is generally practiced to first assemble a battery module including at least one battery cell, preferably a plurality of battery cells, and then fabricate the battery pack using at least one such battery module together with other components.

Here, the term "battery module" refers to a unit comprising a plurality of battery cells connected in series and/or in parallel, whereas the term "battery pack" refers to a unit in which a plurality of such battery modules are interconnected in series and/or in parallel to increase capacity and output.

Meanwhile, when the cylindrical battery cell is exposed to high temperatures, shrinkage of the polymer separator may occur, which may cause a short circuit between the positive and negative electrodes in a core portion of the electrode assembly. At this time, if a short circuit occurs between the positive electrode and the negative electrode, rapid heat generation takes place, which may lead to ignition of the battery cell.

### [SUMMARY OF THE INVENTION]

### [TECHNICAL PROBLEM]

Accordingly, the present invention aims to prevent thermal shrinkage of a separator.

Furthermore, the present invention also aims to prevent internal short-circuiting by separating the positive and negative electrodes, even if partial thermal shrinkage of the separator occurs.

However, the technical objects to be solved by the present invention are not limited to those set forth above, and other objects not expressly mentioned will be clearly understood by those skilled in the art from the following description of the invention.

### [SOLUTION TO THE PROBLEM]

An electrode assembly according to one embodiment of the present invention for solving the above-described problem comprises: a first electrode, a second electrode, and a separator interposed therebetween, wherein the first electrode, the second electrode, and the separator are wound about a winding axis so as to define a core and an outer peripheral surface, and wherein a tape is attached to at least a portion of the separator.

In one aspect of the present invention, a tape may be attached to at least a portion of one end of the separator.

Preferably, the tape may be provided on the core portion of the electrode assembly.

In another aspect of the present invention, the tape may comprise a heat-resistant tape.

Preferably, the tape may be configured so that heat shrinkage does not occur.

In one aspect of the present invention, the first electrode may be configured to have a greater length in the winding direction than the second electrode, and the separator may be configured to have a length greater than the winding-direction lengths of both the first electrode and the second electrode.

In another aspect of the present invention, the tape may be provided further on the core side than one end of the second electrode.

In another aspect of the present invention, the outer peripheral end of the tape may be positioned closer to the core than the core-side end of the second electrode.

In one aspect of the present invention, the width of the tape in the winding direction may be configured to be greater than or equal to the shortest distance from one end of the first electrode to one end of the second electrode.

In another aspect of the present invention, the tape may be attached to at least one surface of the separator.

In one aspect of the present invention, the tape is attached to the side facing the first electrode, and the thickness of the tape may be configured to be greater than the shortest distance from the separator to the first electrode.

In another aspect of the present invention, the tape may be attached on both surfaces of the separator

Meanwhile, the present invention provides a battery cell comprising the electrode assembly according to the foregoing embodiment.

Meanwhile, the present invention provides a battery pack comprising at least one battery cell according to the aforementioned embodiment.

In addition, the present invention provides a vehicle comprising at least one battery pack according to the foregoing embodiment.

### [ADVANTAGEOUS EFFECTS OF THE INVENTION]

According to the present invention, thermal shrinkage of the separator can be prevented.

Furthermore, according to the present invention, even if partial thermal shrinkage of the separator occurs, the positive electrode and the negative electrode can remain separated to prevent an internal short circuit.

However, the advantageous effects of the present invention are not limited to those described above, and other technical effects not explicitly mentioned will be clearly understood by those of ordinary skill in the art from the following description.

### [BRIEF DESCRIPTION OF DRAWINGS]

The accompanying drawings, which are incorporated in and constitute a part of this specification, illustrate preferred embodiments of the present invention and, together with the detailed description set forth below, serve to further clarify the technical idea of the present invention. However, the present invention should not be construed as being limited to the matters illustrated in these drawings.
FIG. 1 is a view illustrating a battery cell according to one embodiment of the present invention.
FIG. 2 is a view illustrating the internal structure of a battery cell according to one embodiment of the present invention.
FIG. 3 is a view illustrating an electrode assembly according to one embodiment of the present invention included in the battery cell of FIG. 1.
FIG. 4 is a view illustrating the relationship between the first electrode, the second electrode, and the separator of a conventional electrode assembly.
FIG. 5 is a view illustrating the process of shrinking the separator when heat is applied to the electrode assembly of FIG. 4.
FIG. 6 is a view illustrating the relationship between a first electrode, a second electrode, and a separator of an electrode assembly according to one embodiment of the present inventio.
FIG. 7 is a view illustrating a process in which the separator shrinks when heat is applied to the electrode assembly of FIG. 6.
FIG. 8 is a view illustrating the relationship between a first electrode, a second electrode, and a separator of an electrode assembly according to another embodiment of the present invention.
FIG. 9 is a view illustrating the relationship between a first electrode, a second electrode, and a separator of an electrode assembly according to still another embodiment of the present invention.
FIG. 10 is a view illustrating the relationship between a first electrode, a second electrode, and a separator of an electrode assembly according to still another embodiment of the present invention.
FIG. 11 is a view illustrating the relationship between the first electrode, the second electrode, and the separator of an electrode assembly according to still another embodiment of the present invention.
FIG. 12 is a view illustrating a battery pack including the battery cell of FIG. 1.
FIG. 13 is a view illustrating a vehicle comprising the battery pack of FIG. 12.

### [MODES FOR CARRYING OUT THE INVENTION]

The advantages and features of the present invention, and the methods of achieving them, will become apparent with reference to the embodiments described in detail below in conjunction with the accompanying drawings. However, the present invention is not limited to the embodiments disclosed below, but may be implemented in various other forms. The embodiments are provided merely to ensure a complete disclosure of the present invention and to fully inform those skilled in the art of the scope of the invention. The present invention is defined only by the scope of the appended claims. Therefore, in some embodiments, well-known process steps, well-known device structures, and well-known technologies are not described in detail so as not to obscure the present invention. Throughout the specification, the same reference numerals refer to the same elements.

In the drawings, the thicknesses of layers and regions may be exaggerated to clearly show multiple layers and regions. Throughout the specification, similar parts are designated by the same reference numerals. When an element such as a layer, film, region, or plate is referred to as being "on" another element, it can be directly on the other element or intervening elements may be present. In contrast, when an element is referred to as being "directly on" another element, it is to be understood that there are no intervening elements present. Similarly, when an element is referred to as being "under" another element, it can be directly under the other element or intervening elements may be present. Conversely, when an element is referred to as being "immediately below" another element, it is to be understood that no other elements are interposed therebetween.

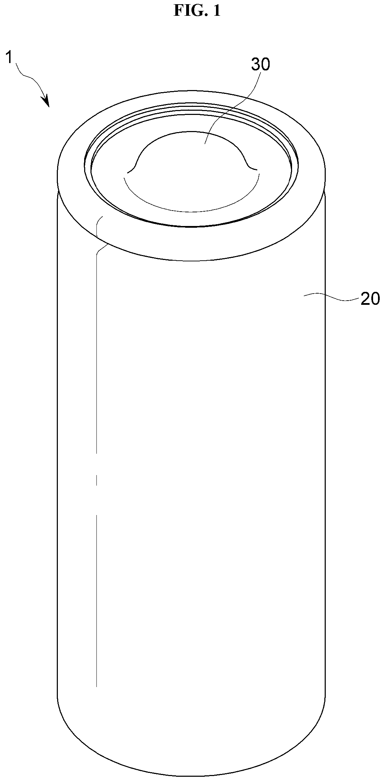

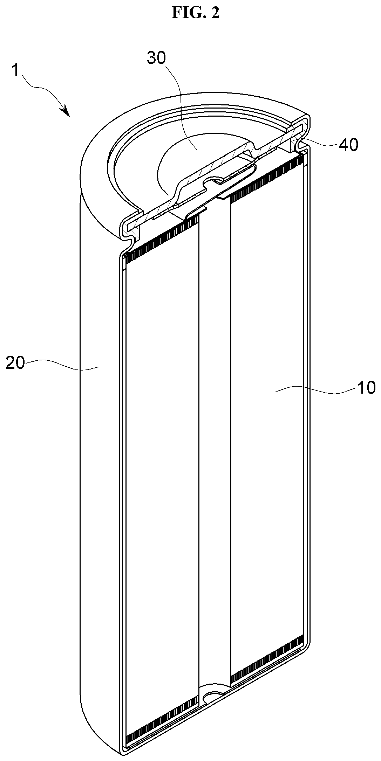

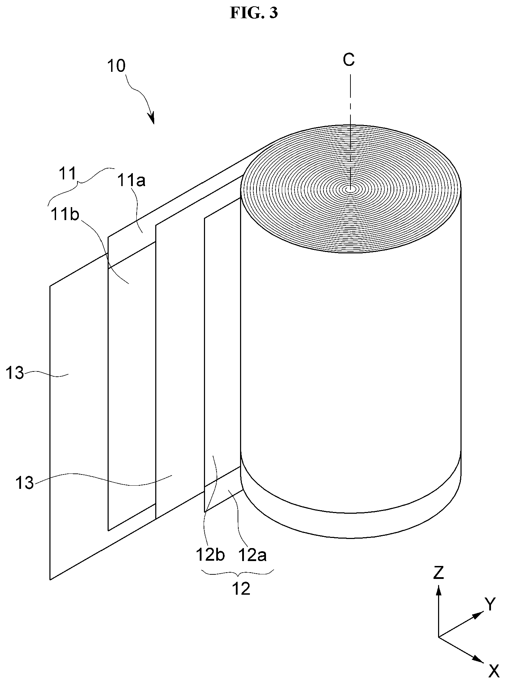

FIG. 1 is a view illustrating a battery cell 1 according to an embodiment of the present invention, and FIG. 2 is a view illustrating the internal structure of the battery cell 1 according to an embodiment of the present invention. FIG. 3 is a view illustrating an electrode assembly 10 according to an embodiment of the present invention included in the battery cell 1 of FIG. 1.

Referring to FIGS. 1 to 3, a battery cell 1 according to an embodiment of the present invention may comprise an electrode assembly 10, a battery can 20, a sealing member 30, and a terminal 40.

Referring to FIGS. 1 to 3, the electrode assembly 10 includes a first electrode 11 having a first polarity, a second electrode 12 having a second polarity, and a separator 13 interposed between the first electrode 11 and the second electrode 12. In the electrode assembly 10, a core portion and an outer circumferential surface are defined by winding the first electrode 11, the second electrode 12, and a separator 13 interposed therebetween around a winding axis.

The first electrode 11 is an anode or a cathode, and the second electrode 12 corresponds to an electrode having a polarity opposite to that of the first electrode 11. The first electrode 11 and the second electrode 12 may each have a sheet-like shape. The electrode assembly 10 may have, for example, a jelly-roll structure. That is, the electrode assembly 10 may be manufactured by sequentially stacking the first electrode 11, the separator 13, the second electrode 12, and the separator 13 at least once to form a laminate, and then winding the laminate about a winding center. In this case, an additional separator 13 may be provided on the outer circumferential surface of the electrode assembly 10 for insulation from the battery can 20.

The first electrode 11 may include a first uncoated region 11a at a longitudinal end, where an active material layer is not formed. The first electrode 11 may include a first coated portion 11b to which an active material layer is attached, in an area excluding the first uncoated portion 11a. Specifically, the first electrode 11 may include a first electrode current collector and a first electrode active material layer coated on one surface or both surfaces of the first electrode current collector. The area where the first electrode active material is applied on the first electrode current collector is referred to as the first coated portion 11b provided in the first electrode 11. At one end in the width direction (a direction parallel to the Z-axis) of the first electrode current collector, a first uncoated region 11a may be present where the first electrode active material is not applied. At least a portion of the first uncoated portion 11a can be used as an electrode tab itself. That is, at least a portion of the first uncoated region 11a may serve as a first electrode tab provided on the first electrode 11.

The second electrode 12 may include a second uncoated portion 12a to which an active material layer is not attached at a longitudinal end. The second electrode 12 may include a second coated region 12b having an active material layer formed thereon, except for the second uncoated region 12a. Specifically, the second electrode 12 comprises a second electrode current collector and a second electrode active material coated on one or both surfaces of the second electrode current collector. The area where the second electrode active material is applied on the second electrode current collector is referred to as the second coated portion 12b provided in the second electrode 12. At the opposite end in the width direction (that is, in a direction parallel to the Z-axis) of the second electrode current collector, a second uncoated region 12a may be provided where the second electrode active material is not formed. At least a portion of the second uncoated portion 12a can be used as an electrode tab itself. That is, at least a portion of the second uncoated region 12a may serve as an electrode tab provided on the second electrode 12.

Meanwhile, in the present invention, the positive electrode active material applied to the positive electrode plate and the negative electrode active material applied to the negative electrode plate may be employed without particular limitation, so long as they are active materials known in the art.

Meanwhile, the separator 13 may be a porous polymer film, for example, a porous polymer film made of a polyolefin-based polymer such as an ethylene homopolymer, a propylene homopolymer, an ethylene/butene copolymer, an ethylene/hexene copolymer, or an ethylene/methacrylate copolymer, used alone or in a laminate thereof. As another example, the separator 13 may be formed of a conventional porous nonwoven fabric, for instance, a nonwoven fabric composed of high-melting-point glass fibers, polyethylene terephthalate fibers, or the like.

Referring to FIG. 3, the separator 13 can be configured to have an approximate sheet shape. The separator 13 may be interposed between the first electrode 11 and the second electrode 12, each having a sheet-like form. The separator 13 prevents electrical contact between the first electrode 11 and the second electrode 12.

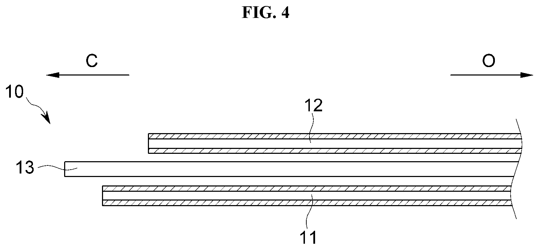

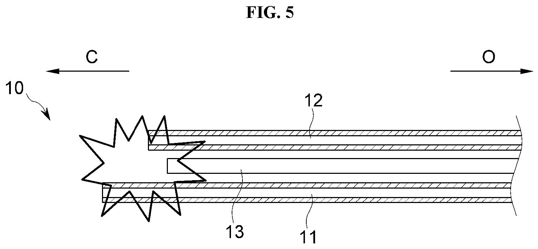

FIG. 4 is a view illustrating the relationship between the first electrode 11, the second electrode 12, and the separator 13 of a conventional electrode assembly 10, and FIG. 5 is a view illustrating the process in which the separator 13 shrinks when heat is applied to the electrode assembly 10 of FIG. 4.

Referring to FIG. 4, the first electrode 11 and the second electrode 12 are wound with a separator 13 interposed therebetween. Referring to FIG. 4, the left side of the drawing is the core side C toward the winding center, and the right side is the outer circumferential side O. Meanwhile, within the battery cell 1, the electrode assembly 10 may be exposed to a high-temperature environment.

At this time, the polymer separator 13 may shrink as shown in FIG. 5. That is, the separator 13 can shrink in all directions, and in particular, as can be seen in FIG. 5, it also shrinks in the winding axis direction. As a result, there is a risk that the positive and negative electrodes in the core portion of the electrode assembly 10 may be short-circuited, resulting in a thermal event such as ignition. Accordingly, in order to prevent the possibility of such an internal short circuit within the battery, it is necessary to provide a separator 13 provided with a tape 14 as in the present invention.

### (First Embodiment)

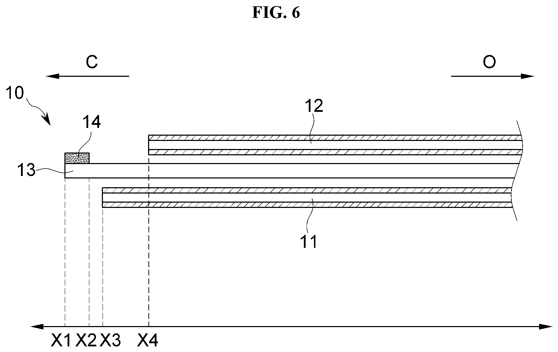

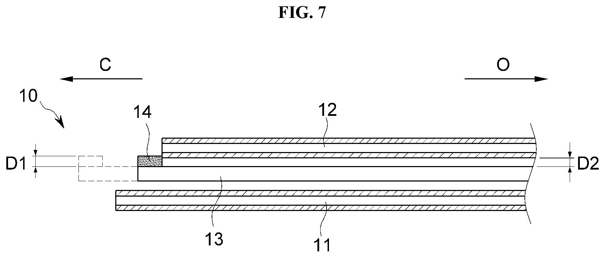

FIG. 6 is a view illustrating the relationship between the first electrode 11, the second electrode 12, and the separator 13 of an electrode assembly 10 according to one embodiment of the present invention, and FIG. 7 is a view illustrating a process in which the separator 13 shrinks when heat is applied to the electrode assembly 10 of FIG. 6.

Referring to FIG. 6, in one aspect of the present invention, a tape 14 may be attached to at least a partial region of the separator 13.

Preferably, a tape 14 may be attached to at least a portion of one end of the separator 13. For example, referring to FIG. 6, a tape 14 may be attached in a strip shape to at least a partial region of a sheet-shaped separator 13. For example, the tape 14 may be formed in a band shape extending in a direction parallel to the winding axis (that is, in a direction parallel to the Z-axis). The tape 14 may be configured to have a predetermined width in a direction perpendicular to the winding axis direction (a direction parallel to the Y-axis). The tape 14 may be a heat-resistant tape 14. That is, the tape 14 may be configured so as to prevent thermal shrinkage from occurring. Preferably, the tape 14 may be provided in the core portion of the electrode assembly 10.

As such, according to the present invention, a heat-resistant tape 14 is provided in at least a partial region of the separator 13, and the tape 14 does not undergo thermal shrinkage even in a high-temperature environment. Accordingly, the tape 14 can effectively prevent a short circuit between the positive and negative electrodes by inhibiting shrinkage of the separator 13. Furthermore, even if shrinkage of the separator 13 occurs to some extent, an internal short circuit can be prevented by separating the positive and negative electrodes.

More specifically, referring to FIG. 6, the first electrode 11 may be formed to have a greater length in the winding direction than the second electrode 12. At this time, the separator 13 may be configured to be longer than the winding direction lengths of the first electrode 11 and the second electrode 12.

In one aspect of the present invention, the tape 14 may be provided closer to the core side C than one end of the second electrode 12. Preferably, the inner end of the tape 14 in the winding direction may be positioned closer to the core side C than the outer end of the second electrode 12 in the winding direction.

Referring to FIG. 6, with respect to the winding axis direction, the position of the core side C end of the separator 13 is referred to as X1, and the position of the outer circumferential side O end of the separator 13 is referred to as X2. Meanwhile, the position of the core-side C end of the first electrode 11 is defined as X3, and the position of the core-side C end of the second electrode 12 is defined as X4.

At this time, the outer circumferential side O end (X2) of the tape 14 is located further toward the core side C than the core side C end (X4) of the second electrode 12. As described above, the tape 14 is configured to be positioned closer to the core side C than the second electrode 12 in a pre-shrinkage state. With this configuration, the tape 14 can be in a state without interference with the second electrode 12 in the pre-shrinkage state.

Subsequently, when the separator 13 is exposed to a high-temperature environment and shrinkage begins, as illustrated in FIG. 7, the separator 13 contracts in the winding axis direction shown in FIG. 7, and particularly shrinks while shifting toward the outer circumferential side O. At this time, as shown in FIG. 7, the tape 14 is caught by the second electrode 12, so that the separator 13 can no longer move toward the outer circumferential side O due to the tape 14. That is, since the tape 14 is caught by the second electrode 12, the separator 13 enters a state where it can no longer be physically shrunk in the winding axis direction. That is, in a high-temperature environment, the step of the tape 14 of the separator 13 becomes engaged with the second electrode 12, thereby placing the separator 13 in a state where it can no longer physically contract. Accordingly, according to the present invention, even if thermal shrinkage of the separator 13 occurs, the physical separation between the positive and negative electrodes can be maintained, thereby effectively preventing a short circuit inside the battery.

In another aspect of the present invention, the thickness of the tape 14 is configured to be greater than the shortest distance from the separator 13 to the first electrode 11.

Referring to FIG. 7, the tape 14 has a thickness of D1, and the shortest distance from the separator 13 to the first electrode 11 is D2. At this time, since the thickness of the tape 14 is greater than the minimum distance from the separator 13 to the first electrode 11, even when the separator 13 undergoes thermal shrinkage in a high-temperature environment, the tape 14 engages with the second electrode 12, thereby preventing the separator 13 from further moving toward the outer circumferential side O by means of the tape 14. That is, since the tape 14 is caught by the second electrode 12, the separator 13 enters a state where it can no longer be physically shrunk in the winding axis direction.

### (Second Embodiment)

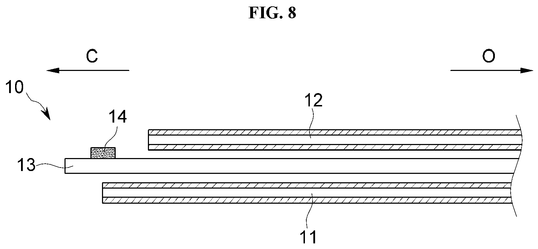

FIG. 8 is a view illustrating the relationship between the first electrode 11, the second electrode 12, and the separator 13 of an electrode assembly 10 according to another embodiment of the present invention.

Since the separator 13 and the tape 14 according to the present embodiment are similar to the separator 13 and the tape 14 of the previous embodiment, redundant descriptions of configurations that are substantially the same as or similar to those of the previous embodiment will be omitted, and the following description will mainly describe the differences from the previous embodiment.

Referring to FIG. 8, the tape 14 may be attached to at least a partial region of one end of the separator 13. At this time, the core side C end of the tape 14 does not necessarily have to coincide with the core side C end of the separator. That is, as shown in FIG. 8, the tape 14 may be provided at a position spaced apart from the core side C end of the separator 13 by a predetermined gap. That is, the tape 14 only needs to be included within a predetermined region including the core side C end of the separator 13. However, even in such a case, the outer circumferential side O end of the tape 14 should be positioned further toward the core side C than the core side C end of the second electrode 12.

According to this embodiment, since the tape 14 is located relatively adjacent to the second electrode 12, the amount of shrinkage of the separator 13 can be relatively reduced. That is, the degree of shrinkage of the separator 13 can be further mitigated. Accordingly, the internal short circuit phenomenon of the battery can be prevented more effectively.

### (Third Embodiment)

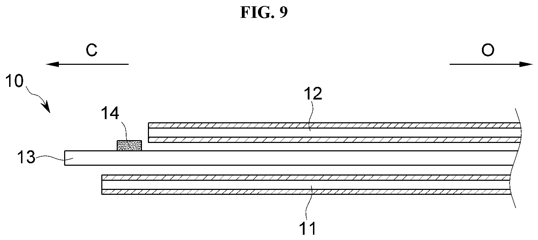

FIG. 9 is a view illustrating the relationship between the first electrode 11, the second electrode 12, and the separator 13 of an electrode assembly 10 according to still another embodiment of the present invention.

Since the separator 13 and the tape 14 according to the present embodiment are similar to the separator 13 and the tape 14 of the previous embodiment, redundant descriptions of configurations that are substantially the same as or similar to those of the previous embodiment will be omitted, and the following description will mainly describe the differences from the previous embodiment.

Referring to FIG. 9, this embodiment is an embodiment in which the tape 14 is positioned closer to the second electrode 12 side compared to FIG. 8. Even in this embodiment, the outer circumferential side O end of the tape 14 must be located further toward the core side C than the core side C end of the second electrode 12.

According to this embodiment, since the tape 14 is positioned relatively closer to the second electrode 12, the amount of shrinkage of the separator 13 can be further reduced. That is, the degree of shrinkage of the separator 13 can be further mitigated. Accordingly, the internal short circuit phenomenon of the battery can be prevented more effectively.

### (Fourth Embodiment)

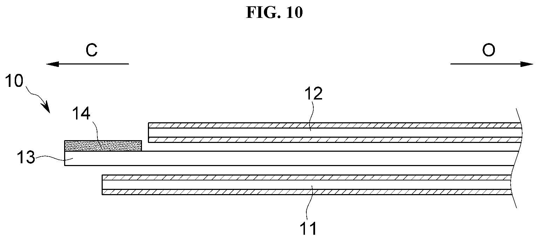

FIG. 10 is a view illustrating the relationship between the first electrode 11, the second electrode 12, and the separator 13 of an electrode assembly 10 according to still another embodiment of the present invention.

Since the separator 13 and the tape 14 according to the present embodiment are similar to the separator 13 and the tape 14 of the previous embodiment, redundant descriptions of configurations that are substantially the same as or similar to those of the previous embodiment will be omitted, and the following description will mainly describe the differences from the previous embodiment.

Referring to FIG. 10, the width of the tape 14 in the winding direction may be configured to be greater than or equal to the shortest distance from one end of the first electrode 11 to one end of the second electrode 12. That is, according to this embodiment, the width of the tape 14 in the winding direction is formed to be greater than that in the first to third embodiments. The area equal to the shortest distance between one end of the first electrode 11 and one end of the second electrode 12 is an area that must be separated by the separator 13.

According to this embodiment, even if shrinkage occurs in a region where the tape 14 is not provided, the region where the tape 14 is provided does not undergo shrinkage, so that the area corresponding to the shortest distance between one end of the first electrode 11 and one end of the second electrode 12 can be reliably isolated by the tape 14.

### (Fifth Embodiment)

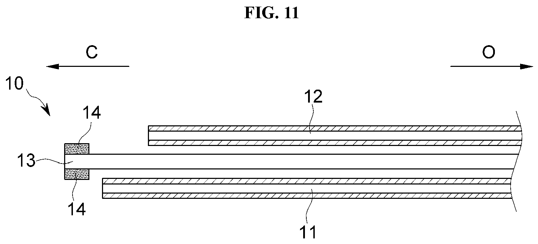

FIG. 11 is a view illustrating the relationship between the first electrode 11, the second electrode 12, and the separator 13 of an electrode assembly 10 according to still another embodiment of the present invention.

Since the separator 13 and the tape 14 according to the present embodiment are similar to the separator 13 and the tape 14 of the previous embodiment, redundant descriptions of configurations that are substantially the same as or similar to those of the previous embodiment will be omitted, and the following description will mainly describe the differences from the previous embodiment.

In one aspect of the present invention, the tape 14 may be attached to at least one of both surfaces of the separator 13. For example, the tape 14 may be attached on the side facing toward the first electrode 11. This structure is illustrated in the first to fourth embodiments.

Meanwhile, referring to FIG. 11, the tape 14 may be attached to both surfaces of the separator 13. At this time, the attachment positions of the tapes 14 may be identical to each other. Conversely, it may be attached to both surfaces of the separator 13. At this time, the attachment positions of the tapes 14 may be different from each other. For example, the position of the tape 14 attached to the surface facing the first electrode 11 and the position of the tape 14 attached to the surface facing the second electrode 12 may differ from each other.

The first electrode 11 is configured to have a longer length in the winding direction than the second electrode 12, and specifically, the separator 13 is configured to be longer than the winding direction lengths of the first electrode 11 and the second electrode 12, so that the tape 14 attached to the surface facing the first electrode 11 may be positioned further toward the core side C than the tape 14 attached to the surface facing the second electrode 12.

As such, in the structure where the tape 14 is attached to both surfaces of the separator 13, the shrinkage-prevention effect of the separator 13 can be further enhanced. For example, when the separator 13 shrinks in the winding axis direction, the shrinkage of the separator 13 can be primarily physically prevented by the tape 14 attached to the surface facing the first electrode 11. At this time, even if the tape 14 attached to the surface facing the first electrode 11 becomes detached due to an external impact or the like, the tape 14 attached to the surface facing the second electrode 12 is engaged by the second electrode 12, so that the separator 13 enters a state in which further physical shrinkage in the winding axis direction is prevented. Accordingly, according to the present invention, even if thermal shrinkage of the separator 13 occurs, the physical separation between the positive and negative electrodes can be maintained, thereby effectively preventing a short circuit inside the battery.

In another aspect of the present invention, the tape 14 may be an insulating attachment layer or an insulating tape 14. However, the shape of the tape 14 is not limited to this, and if the tape 14 has a shape that can be attached to the separator 13 while securing insulating performance, it can be adopted in the present invention. In another aspect of the present invention, the tape 14 may include, for example, an oil-based SBR binder and aluminum oxide to secure insulating performance.

Referring again to FIGS. 1 and 2, the battery can 20 is a generally cylindrical receptacle having an opening formed at the top, and is made of a conductive material such as metal, for example. The material of the battery can 20 may be, for example, aluminum. The side surface (outer circumferential surface) and the bottom surface of the battery can 20 may be integrally formed. The bottom surface (the surface parallel to the X-Y plane) of the battery can 20 has a generally flat shape. The bottom surface positioned opposite the open portion is hereinafter referred to as the closed portion. The battery can 20 accommodates the electrode assembly 10 through an opening formed at the top, and also accommodates an electrolyte.

The battery can 20 is electrically coupled to the electrode assembly 10. The battery can 20 may be electrically connected to one of the first electrode 11 and the second electrode 12. For example, the battery can may be electrically connected to the first electrode 11 of the electrode assembly 10. In this case, the battery can 20 may be configured to have the same polarity as the first electrode 11.

Referring again to FIG. 2, the sealing body 30 may be made of, for example, a metal material to ensure rigidity. The sealing body 30 may cover the opening formed at the top of the battery can 20. That is, the sealing body 30 constitutes the upper surface of the battery cell 1. In the battery cell 1 of the present invention, the sealing body 30 has no polarity even if it is made of a conductive metal material. The absence of polarity may indicate that the sealing body 30 is electrically insulated from the battery can 20 and the terminal 40. Therefore, the sealing body 30 does not function as a positive terminal or a negative terminal. Accordingly, the sealing body 30 need not be electrically coupled to the electrode assembly 10 or the battery can 20, and its material is not necessarily required to be a conductive metal.

When the battery can 20 of the present invention includes a beading portion, the sealing body 30 may be seated on the beading portion formed on the battery can 20. In addition, when the battery can 20 of the present invention is provided with a crimping portion, the sealing body 30 may be secured by means of the crimping portion. A sealing gasket may be interposed between the sealing body 30 and the crimped portion of the battery can 20 to secure the airtightness of the battery can 20.

Referring again to FIGS. 1 and 2, the terminal 40 may be electrically connected to the other one of the first electrode 11 and the second electrode 12. That is, the terminal 40 may have an opposite polarity to that of the battery can 20. For example, the terminal 40 may be electrically coupled to the second electrode 12 of the electrode assembly 10. And, the surface of the terminal 40 may be exposed to the outside.

The terminal 40 may be made of a conductive metal material. The terminal 40 may, for instance, extend through approximately the central portion of the closed section formed at the bottom of the battery can 20. A part of the terminal 40 may be exposed to the lower part of the battery can 20 and the remaining part may be located inside the battery can 20. The terminal 40 may be fixed on the inner surface of the closed portion of the battery can 20, for example, by riveting. The terminal 40 may extend through an insulator and be joined to the second uncoated portion 12a provided on the second current collector plate or on the second electrode 12. In this case, the terminal 40 may have a second polarity. Therefore, the terminal 40 can function as a second electrode 12 terminal in the battery cell 1 of the present invention. When the terminal 40 has the second polarity as described above, it is electrically insulated from the battery can 20 having the first polarity. Electrical insulation between the terminal 40 and the battery can 20 can be realized in various ways. For example, insulation may be achieved by interposing an insulating gasket between the terminal 40 and the battery can 20.

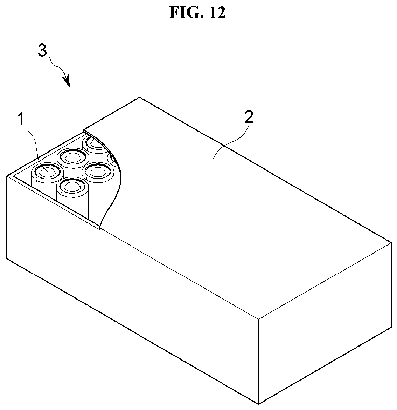

FIG. 12 is a view illustrating a battery pack 3 including the battery cell 1 of FIG. 1.

The cylindrical battery cell 1 according to the above-described embodiments may be used to manufacture a battery pack 3. Referring to FIG. 12, a battery pack 3 according to one embodiment of the present invention includes a battery assembly in which a plurality of battery cells 1 according to one embodiment of the present invention as described above are electrically connected, and a pack housing 2 accommodating the same. In the drawings of the present invention, for ease of illustration, components such as bus bars, cooling units, and power terminals for electrical connections are omitted. In addition, the battery pack 3 may further include various components, such as components of the battery pack 3 known at the time of filing of the present invention, such as a BMS, a relay, a current sensor, and the like.

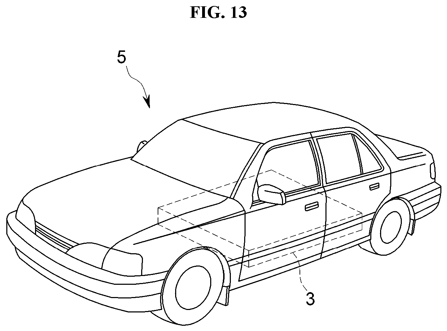

FIG. 13 is a view illustrating a vehicle 5 including the battery pack 3 of FIG. 12.

Referring to FIG. 13, a vehicle 5 according to an embodiment of the present invention may be, for example, an electric vehicle 5, a hybrid vehicle 5, or a plug-in hybrid vehicle 5, and includes the battery pack 3 according to an embodiment of the present invention. The vehicle 5 includes a four-wheeled vehicle 5 and a two-wheeled vehicle 5. The vehicle 5 operates by receiving power from the battery pack 3 according to one embodiment of the present invention. In addition, the vehicle 5 according to the present invention may further include various other components included in the vehicle 5 in addition to the battery cell 1 or the battery pack 3. For example, in addition to the battery cell 1 according to the present invention, the vehicle 5 according to the present invention may further include a vehicle body, a motor, and a control device such as an electronic control unit (ECU).

Meanwhile, although terms indicating directions such as up and down are used in this specification, it is obvious to those skilled in the art that these terms are only for convenience of explanation and may vary depending on the location of the target object or the location of the observer.

While the present invention has been described with reference to the limited embodiments and the accompanying drawings, the present invention is not limited thereto, and it is to be understood that various modifications and variations can be made by those of ordinary skill in the art to which the present invention pertains within the technical spirit of the present invention and the scope of the appended claims and their equivalents.

## Claims

1. An electrode assembly, wherein a first electrode, a second electrode, and a separator interposed therebetween are wound around a winding axis to define a core and an outer circumferential surface, and wherein
a tape is attached to at least a partial region of the separator.

2. The electrode assembly of claim 1, wherein
the tape is attached to at least a partial region of one end of the separator.

3. The electrode assembly of claim 1, wherein
the tape is provided in a core portion of the electrode assembly.

4. The electrode assembly of claim 1, wherein
the tape is a heat-resistant tape.

5. The electrode assembly of claim 1, wherein
the tape is configured not to cause thermal shrinkage.

6. The electrode assembly of claim 1, wherein
the first electrode is configured to have a longer winding direction length than the second electrode, and
the separator is configured to be longer than the winding direction lengths of the first electrode and the second electrode.

7. The electrode assembly of claim 1, wherein
the tape is provided closer to a core side than one end of the second electrode.

8. The electrode assembly of claim 1, wherein
an outer circumferential side end of the tape is located closer to the core side than a core side end of the second electrode.

9. The electrode assembly of claim 1, wherein
a width of the tape in the winding direction
is greater than or equal to a shortest distance from one end of the first electrode to one end of the second electrode.

10. The electrode assembly of claim 1, wherein
the tape is attached to at least one of both surfaces of the separator.

11. The electrode assembly of claim 1, wherein
the tape is attached to a side facing the first electrode, and
a thickness of the tape is greater than a shortest distance from the separator to the first electrode.

12. The electrode assembly of claim 1, wherein
the tape is attached to both surfaces of the separator.

13. A battery cell comprising the electrode assembly according to any one of claims 1 to 12.

14. A battery pack comprising at least one battery cell according to claim 13.

15. A vehicle comprising at least one battery pack according to claim 14.
